(19)

Europäisches
Patentamt
European
Patent Office
Office européen
des brevets

(11) **EP 2 234 360 B1**

(12) **EUROPEAN PATENT SPECIFICATION**

(45) Date of publication and mention
of the grant of the patent:
**11.05.2011 Bulletin 2011/19**

(51) Int Cl.:
***H04L 27/26*** (2006.01)

(21) Application number: **09156437.7**

(22) Date of filing: **27.03.2009**

(54) **Ordered successive interference cancellation in multi-channel wireless communication systems**

Geordnete, aufeinander folgende Interferenzlöschung in drahtlosen Multi-Kanal-Kommunikationssystemen

Elimination successive ordonnée d'interférence dans des systèmes de communication multicanaux sans fil

(84) Designated Contracting States:
**DE FR GB IT**

(43) Date of publication of application:
**29.09.2010 Bulletin 2010/39**

(73) Proprietor: **Fujitsu Limited**
**Kawasaki-shi, Kanagawa 211-8588 (JP)**

(72) Inventors:
• **Hunukumbure, Mythri**
**Hillingdon, Middlesex UB8 3WF (GB)**
• **Sarperi, Luciano**
**Hayes, Middlesex UB4 9QS (GB)**

(74) Representative: **Fenlon, Christine Lesley et al**
**Haseltine Lake LLP**
**Lincoln House, 5th Floor**
**300 High Holborn**
**London WC1V 7JH (GB)**

(56) References cited:
**EP-A- 1 596 520      US-A1- 2003 189 999**
**US-A1- 2006 023 624**

• **ZHANG XIAOGE ET AL: "A New OSIC Detection Algorithm for V-BLAST Systems" 2007 3RD INTERNATIONAL CONFERENCE ON WIRELESS COMMUNICATIONS, NETWORKING, AND MOBILE COMPUTING, 21 September 2007 (2007-09-21), - 25 September 2007 (2007-09-25) pages 1352-1355, XP002552452 IEEE, Piscataway, NJ, USA**

**Description**

The present invention relates to ordered successive cancellation schemes in multi-channel wireless communication systems, and more particularly to wireless communication systems having multi-user multiple-input, multiple-output (MU-MIMO) capability.

Wireless communication systems are widely known in which a base station (BS) communicates with multiple subscriber stations (SS or MS, also called users) within range of the BS. The area covered by one BS is called a cell and typically, many base stations are provided in appropriate locations so as to cover a wide geographical area more or less seamlessly with adjacent cells. Each BS divides its available bandwidth, i.e. frequency and time resources, into individual resource allocations for the users. There is a constant need to increase the capacity of such systems in order to accommodate more users and/or more data-intensive services.

OFDM is one known technique for transmitting data in a wireless communication system. An OFDM (Orthogonal Frequency Division Multiplex)-based communications scheme divides data symbols to be transmitted among a large number of subcarriers (also called frequency fingers) which are equally spaced in frequency, hence frequency division multiplexing. By inserting a cyclic prefix (CP) at the transmitter and by removing the CP at the receiver, intersymbol interference is avoided. The CP is inserted and removed in time domain and consists of a copy of the last L time domain samples within a symbol period. The choice of L depends on the channel delay spread. Data is modulated onto a subcarrier by adjusting its phase, amplitude, or both phase and amplitude.

The "orthogonal" part of the name OFDM refers to the fact that the spacings of the subcarriers are specially chosen so as to be orthogonal, in a mathematical sense, to the other subcarriers. More precisely, they are arranged along the frequency axis such that the sidebands of adjacent subcarriers are allowed to overlap but can still be received without inter-subcarrier interference, commonly referred to as ICI. In mathematical terms, the sinusoidal waveforms of each subcarrier are called eigenfunctions of a linear channel, with the peak of each sinusoid coinciding with a null of every other sinusoid. This can be achieved by making the subcarrier spacing a multiple of the reciprocal of the symbol period.

When individual subcarriers or sets of subcarriers are assigned to different users of the wireless communication system, the result is a multi-access system referred to as OFDMA. In this specification, the term OFDM is henceforth used to include OFDMA. By assigning distinct frequency/time resources to each user in a cell, OFDMA can substantially avoid interference among the users within a cell.

A further modification of the basic OFDM scheme is called MIMO OFDM, where MIMO stands for multiple-input multiple-output. This scheme employs multiple antennas at both the transmitter and the receiver to enhance the data capacity achievable between the BS and each user. For example, a 4x4 MIMO channel is one in which transmitter and receiver communicate with one another each using four antennas. There is no need for the transmitter and receiver to employ the same number of antennas. Typically, a base station in a wireless communication system will be equipped with many more antennas in comparison with a mobile handset, owing to differences in power, cost and size limitations.

Considering the simplest example of a transmitter (e.g. base station) communicating with a single receiver (subscriber station), the MIMO channel is the frequency (or equivalently time delay) response of the radio link between the transmitter and receiver. It contains all the sub-carriers, and covers the whole bandwidth of transmission. A MIMO channel contains many individual radio links hence it has Nt x Nr SISO channels (also called sub-channels), where Nt is the number of transmitting antennas and Nr is the number of receiving antennas. For example, a 2x2 MIMO arrangement contains 4 links, hence it has 4 SISO channels. The SISO channels can be combined in various ways to transmit one or more data streams to the receiver.

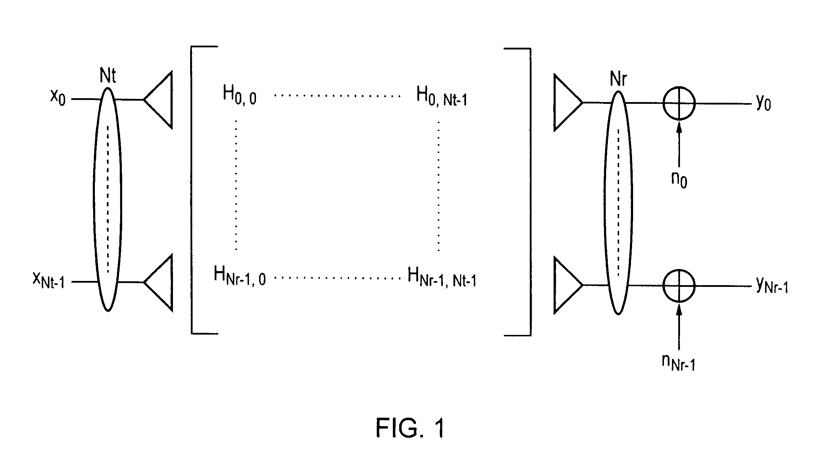

Fig. 1 is a conceptual diagram of a generalized MIMO system. In Fig.1, a transmitter transmits signals utilizing Nt transmitting antennas, and the receiver receives the signals from the transmitter utilizing Nr receiving antennas. The characteristics of the individual SISO channels or subchannels between the transmitter and receiver are denoted by $H_{0,0}$ to $H_{Nr-1, Nt-1}$, and as indicated in the Figure, these form terms of a matrix called the channel matrix or channel response matrix H. "$H_{0,0}$" indicates the channel characteristics (for example, channel frequency response) for transmitting signals from the transmitting antenna 0 to the receiving antenna 0. "$H_{Nr-1, Nt-1}$" indicates the channel characteristics for transmitting signals from the transmitting antenna Nt-1 to the receiving antenna Nr-1, and so on.

In Fig. 1, the symbols $X_0$ to $X_{Nt-1}$, which are transmitted using the transmitting antennas No to $N_{Nt-1}$, form a transmit vector x. Likewise, received signals $y_0$ to $y_{Nr-1}$, which are received using the receiving antennas No to $N_{Nr-1}$, together form a received signal vector y. Without precoding (see below), the vectors y and x are related by:

$$y = H.x + n \qquad (1)$$

where H is the channel matrix and n is a term representing noise in each receiving antenna.

The channel matrix H has a rank which is the number of independent rows or columns. When some of the rows or columns are mutually-dependent (indicating correlation between the individual subchannels) the MIMO channel is called "rank deficient". In such a case, the MIMO channel is incapable of providing the maximum data throughput due to correlation.

MIMO transmission schemes include so-called non-adaptive and adaptive configurations. In the non-adaptive case, the transmitter does not have any knowledge of the channel properties and this limits performance, as the transmitter cannot take account of changes in conditions (channel profile). Adaptive schemes rely on the receiver feeding back information (channel-state information or CSI) to the transmitter, or locally deriving the CSI, allowing it to adapt the transmitted signal to changing conditions and maximise data throughput. A feedback path (not shown) from the receiver to the transmitter carries the feedback signals for informing the transmitter of the channel properties.

Closed-loop systems are required in FDD (Frequency Division Duplex) systems, where the uplink (mobile to base station) and downlink (vice-versa) employ two different carrier frequencies. Because of the frequency change, the uplink and downlink channels are different and CSI needs to be fed back. In TDD (Time Division Duplex) systems the uplink and downlink are transmitted in two adjacent time slots on the same frequency. The two time slots are within the channel coherence time (the channel does not change) so the channel state information need not be fed back. The transmitter can estimate the channel from the received signal on the reverse link, usually aided by the insertion of pilots or known waveforms by the transmitter into the signal sent on the reverse link.

MIMO configurations can be employed in which the Nt transmitting antennas consist of the respective antennas of Nt independent radio terminals or users, in order to enhance the communication capabilities of each individual terminal. This configuration is known as a multi-user MIMO (MU-MIMO) configuration.

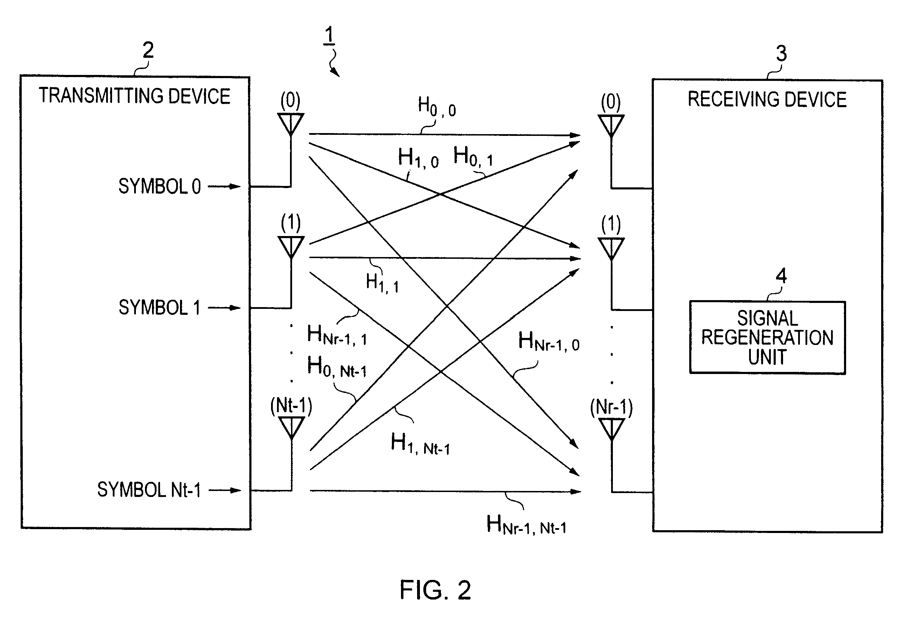

Fig. 2 is a diagram showing the configuration of a MIMO system in more concrete terms. MIMO system 1 comprises a transmitter 2 which comprises a plurality of transmitting antennas and a receiver 3 which comprises a plurality of receiving antennas.

The transmitter 2 transmits symbols 0 to Nt - 1 in parallel using Nt transmitting antennas; the symbols can be created from one data stream, referred to as vertical encoding, or different data streams, referred to as horizontal encoding. In addition, each transmitted symbol corresponds to, for example, one-bit data if the modulation method is BPSK, and corresponds to two-bit data if the modulation method is QPSK. The receiver 3 receives the signals transmitted from the transmitting device 2 using Nr receiving antennas, and it comprises a signal regeneration unit 4 which regenerates the transmitted symbols from the signals received. In this configuration, a number of spatial modes is available corresponding to the minimum value of Nt and Nr.

As indicated by the arrows in Figure 2, the signals transmitted from each of the plurality of transmitting antennas are received by each of the plurality of receiving antennas, giving rise to Nt x Nr subchannels in total. In other words, the signals transmitted from the transmitting antenna (0) are received by receiving antennas (0) through (Nr - 1), and likewise, the signals transmitted from the transmitting antennas (Nt - 1) are also received by the receiving antennas (0) through (Nr - 1). The characteristics of the subchannel which propagates the signals from the i-th transmitting antenna to the j-th receiving antenna are expressed as "$H_{i,j}$" and form one component term of the Nr x Nt channel matrix H.

The subchannel characteristics are measured prior to, or during, transmission of actual data, typically by sending pilot signals. The transmitter 2 transmits a pilot signal using the transmitting antenna (0). The receiver 3 receives the pilot signal transmitted from the transmitting antenna (0) through the receiving antennas (0) to (Nr -1). In this case, since the transmitting power of the pilot signal is determined in advance, the receiving device 3 obtains each component ($H_{0,0}$ to $H_{Nr-1,0}$) of the first column in the channel matrix by monitoring the power, SNR, etc. of the signal received through the receiving antennas (0) to (Nr - 1). Thereafter, each component of the 2nd to Nt-th columns in the channel matrix can be obtained, in the same way using pilot signals transmitted from each transmitting antenna.

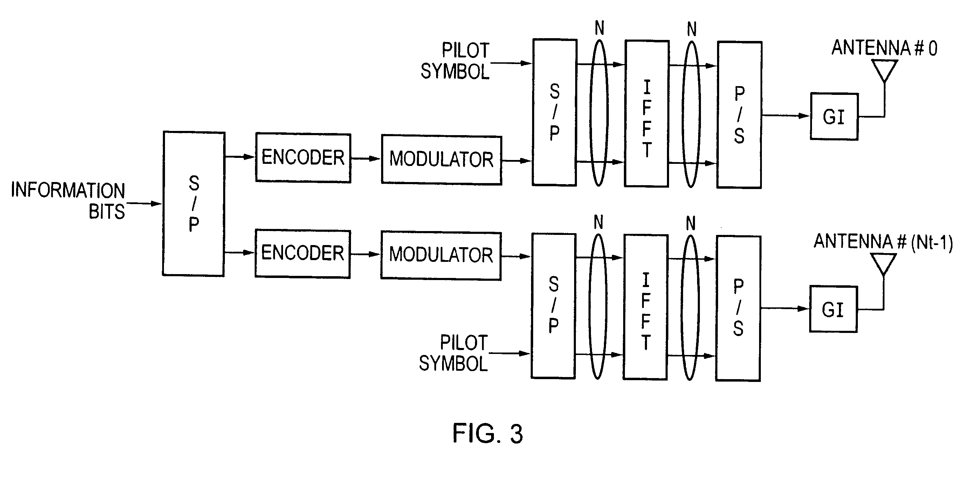

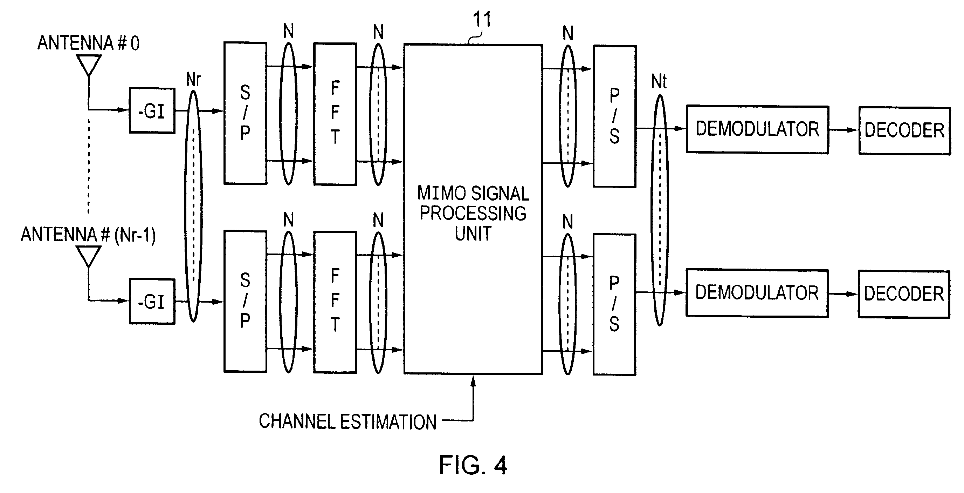

In the MIMO system 1, if the symbol x ($x_0$~$x_{Nt-1}$) is transmitted from the transmitting device 2, the signal y ($y_0$~$y_{Nr-1}$) detected in the receiving device 3 is expressed by equation (1). Therefore, in the absence of noise n, the receiving device 3 can obtain correct transmitted symbols by detecting the channel matrix H and performing an inverse operation corresponding to the influence of each component in the channel matrix H on the signal. In practice, however, noise n is present and, in addition, the channel matrix H cannot be determined with absolute accuracy. Therefore, the receiver 3 estimates the transmitted symbol from the received signal y and the channel matrix H and introduces an algorithm for minimizing the error of this estimated value. By way of background explanation, a MIMO-OFDM transmitter and receiver will be briefly outlined with reference to Figures 3 and 4. Fig. 3 is a schematic diagram of a MIMO-OFDM transmitter. High-speed binary data is encoded (convolutional code is an example), interleaved, and modulated (using a modulation scheme such as BPSK, QPSK 64QAM, and the like). Independent channel encoders may be used for each transmitting antenna. Subsequently, the data is converted into parallel low-speed modulated data streams which are fed to N sub-carriers. The output from each encoder is carried separately on a plurality of sub-carriers. The modulated signals are frequency-division multiplexed by N-point inverse fast Fourier transform (IFFT). The resulting OFDM signal is converted into an analog signal by a D/A converter and is upconverted into RF band and transmitted over the air.

At the MIMO-OFDM receiver schematically shown in Fig. 4, the received signals from the Nr receive antennas are filtered by a band pass filter (BPF), and then down-converted to a lower frequency. The down-converted signal is sampled by A/D converter (namely, converted into a digital signal), and the guard interval is removed. After the sampled data is fed to the N-point fast Fourier transformer (FFT). After Fourier transformation is performed on each of the signals received through the Nr receive antennas, they are fed to the MIMO signal processing unit 11. Here, the MIMO signal processing unit 11 comprises a signal regeneration unit 4 which performs algorithms to compensate for the channel characteristics, using the channel matrix H and taking account of the precoding applied on the transmitter side.

As explained above, each of the Nr receiving antennas will output received symbol streams made up of up to Nt transmitted symbol streams, and these Nr signals must be processed to recover each of the transmitted symbol streams. A successive interference cancellation (SIC) processing technique may be employed at the receiver to process the Nr received symbol streams to recover the Nt transmitted symbol streams. In the SIC processing technique the received symbol streams are successively processed to recover one transmitted symbol stream at a time. For each processing stage, spatial or space-time processing is initially performed on the received symbol stream to provide a number of detected symbol streams, which are estimates of the transmitted symbol streams. One of the detected symbol streams is then selected for recovery and this symbol stream is further processed to obtain a corresponding decoded data stream, which is an estimate of the transmitted data stream corresponding to the symbol stream being recovered. The signal-to-noise-and-interference-ratios (SNRS) of the received symbol streams (received SNRs) depend on the different channel conditions experienced (e.g. shadowing effects, frequency selective fading) by the transmitted symbol streams. Each recovered symbol stream is associated with a particular "post-detection" SNR, which is the SNR achieved after the spatial or space-time processing to separate out the symbol stream, and in SIC processing the post-detection SNR of each recovered symbol stream is dependent on that stream's received SNR and the stage of SIC processing at which the symbol stream was recovered. The post-detection SNR of the recovered symbol stream determines the likelihood of correctly decoding the symbol stream so as to obtain the corresponding data stream, so the transmitted symbol streams are recovered in a particular order so as to maximize the likelihood of correctly recovering all transmitted symbol streams. In one form of SIC processing, known as ordered successive interference cancellation (OSIC), the detected symbol stream with the highest equivalent SNR is selected for recovery at each stage of the processing. This is disclosed, for example, in US-A-2003/0189999.

Although a scheduler will attempt to pool users with a similar SNR to a MU-MIMO (or Collaborative Spatial Multiplexing (SM)) uplink, different shadowing effects can significantly vary the received SNR amongst users.

For this reason an adaptive modulation and coding (AMC) scheme is used in which each user is allocated an MCS dependent upon the conditions of the uplink for that user. Each MCS in the AMC scheme has a different BER (Bit Error Rate) vs SNR characteristic. In the uplink the users are allocated the highest possible MCS while maintaining a BER at or below a desired level.

As mentioned above, in a conventional OSIC scheme the detected symbol stream with the highest SNR is selected for recovery and is further processed to obtain a corresponding decoded data stream which is an estimate of the transmitted data stream corresponding to the symbol stream being recovered. However, where each user has a different MCS, it is not necessarily the case that the detected symbol stream with the highest SNR corresponds to the lowest BER, as multiple BER curves are operated in the active AMC region. Accordingly, it is desirable to provide an improved OSIC receiver and method for use therewith.

According to an embodiment of a first aspect of the present invention, there is provided a method of determining which of n symbol streams detected by a receiver in a multi-channel wireless communication system should be processed first in an ordered successive interference cancellation (OSIC) scheme, each of the n detected symbol streams being an estimate of a transmitted symbol stream transmitted by a transmitter of the communication system, which method comprises the steps of: calculating, for each of the n detected symbol streams, a value s, where $s = a.SNR_n + (1-\alpha).\Delta_{SNRn}$, $SNR_n$ being the received signal-to-noise-and-interference ratio (SNR) for the nth detected symbol stream, $\Delta_{SNRn}$ being the margin from the received SNR for the nth detected symbol stream to the threshold of the operating modulation and coding scheme (MCS) for the nth detected symbol stream, and $\alpha$ being a weighting parameter in the range from 0 to 1 selected so as to optimise an error rate probability value for the n detected symbol streams; and selecting the detected symbol stream with the highest value of s to be the first of the n detected symbol streams to be processed in the OSIC scheme.

A method embodying the first aspect of the present invention may further comprise finding a value for the parameter $\alpha$ by carrying out an iterative training session, before calculating the value s for the n detected symbol streams. Preferably the training session comprises: transmitting training sequences to the receiver; calculating s for the received training sequences m times using a different value of $\alpha$ in each calculation step, where $m \geq 1$ and the value of $\alpha$ is decreased for each successive calculation step, and recording the error rate probability values obtained using those values of $\alpha$; for each calculation step after the first, comparing the error rate probability value obtained in that calculation step with that obtained in the immediately preceding calculation step, until the error rate probability value obtained in the calculation step is the same as or higher than that obtained in the immediately preceding calculation step; and se-

lecting the value of $\alpha$ used in the immediately preceding calculation step to be the value of $\alpha$ to be used to calculate the value s for the n detected symbol streams.

According to an embodiment of a second aspect of the present invention there is provided a multi-channel wireless communication system having a receiver, wherein the receiver is operable to determine which of n symbol streams detected by the receiver should be processed first in an ordered successive interference cancellation (OSIC) scheme to be carried out by the receiver, each of the n detected symbol streams being an estimate of a transmitted symbol stream transmitted by a transmitter of the communication system, the receiver comprising: calculating means for calculating, for each of the n detected symbol streams, a value s, where s = $\alpha . SNR_n + (1- \alpha).\Delta_{SNRn}$, $SNR_n$ being the received signal-to-noise-and-interference ratio (SNR) for the nth detected symbol stream, $\Delta_{SNRn}$ being the margin from the received SNR for the nth detected symbol stream to the threshold of the operating modulation and coding scheme (MCS) for the nth detected symbol stream, and $\alpha$ being a weighting parameter in the range from 0 to 1 selected so as to optimise an error rate probability value for the n detected symbol streams; and selecting means for selecting the detected symbol stream with the highest value of s to be the first of the n detected symbol streams to be processed in the OSIC scheme.

Preferably a transmitter of the communication system is configured to employ an adaptive modulation and coding (AMC) scheme.

The system could be, for example, a cellular mobile network, distributed geographically to provide communication services to users in a geographical area. The mobile subscriber stations could therefore be, for example, mobile telephones, PDAs (Personal Digital Assistants), personal computers, or any other fixed or mobile communication devices.

According to an embodiment of a third aspect of the present invention there is provided a receiver for use in a multi-channel wireless communication system, which receiver comprises order determining means for determining which of n symbol streams detected by the receiver should be processed first in an ordered successive interference cancellation (OSIC) scheme to be carried out by the receiver, which order determining means comprises: calculating means for calculating, for each of the n detected symbol streams, a value s, where s = $\alpha . SNR_n + (1- \alpha).\Delta_{SNRn}$, $SNR_n$ being the received signal-to-noise-and-interference ratio (SNR) for the nth detected symbol stream, $\Delta_{SNRn}$ being the margin from the received SNR for the nth detected symbol stream to the threshold of the operating modulation and coding scheme (MCS) for the nth detected symbol stream, and $\alpha$ being a weighting parameter in the range from 0 to 1 selected so as to optimise an error rate probability value for the n detected symbol streams; and selecting means for selecting the detected symbol stream with the highest value of s to be the first of the n detected symbol streams to be processed in the OSIC scheme.

A receiver in a system embodying the second aspect of the present invention, or a receiver embodying the third aspect of the present invention, may further comprise parameter determining means for finding a value for the parameter $\alpha$, before calculating the value s for the n detected symbol streams, by carrying out an iterative training session. Preferably, the parameter determining means are operable to carry out the training session of: calculating s for received training sequences m times using a different value of $\alpha$ in each calculation step, where $m \geqq 1$ and the value of $\alpha$ is decreased for each successive calculation step, and recording the error rate probability values obtained using those values of $\alpha$; for each calculation step after the first, comparing the error rate probability value obtained in that calculation step with that obtained in the immediately preceding calculation step, until the error rate probability value obtained in the calculation step is the same as or higher than that obtained in the immediately preceding calculation step; and selecting the value of $\alpha$ used in the immediately preceding calculation step to be the value of $\alpha$ to be used to calculate the value s for the n detected symbol streams.

In a method embodying the first aspect of the present invention, a system embodying the second aspect of the present invention, or a receiver embodying the third aspect of the present invention, the error rate probability value is preferably the Block Error Rate (BLER) or the Bit Error Rate (BER).

Preferably, the communication system is a multi-user multiple input/multiple output (MU-MIMO) communication system.

According to an embodiment of a fourth aspect of the present invention, there is provided software which, when executed by a processor of a receiver in a wireless communication system, causes the receiver to carry out a method according to the aforementioned first aspect of the present invention.

According to an embodiment of a fifth aspect of the present invention, there is provided software which, when executed by a processor of a receiver in a wireless communication system, causes the receiver to become a receiver according to the aforementioned third aspect of the present invention.

According to an embodiment of a sixth aspect of the present invention, there is provided a computer program which, when executed on a receiver of a multi-channel wireless communication system, is operable to carry out a method of determining which of n symbol streams detected by the receiver should be processed first in an ordered successive interference cancellation (OSIC) scheme, each of the n detected symbol streams being an estimate of a transmitted symbol stream transmitted by a transmitter of the communication system, which method comprises the steps of: calculating, for each of the n detected symbol streams, a value s, where s = $\alpha . SNR_n + (1- \alpha).\Delta_{SNRn}$, $SNR_n$ being the received signal-to-noise-and-interference ratio (SNR) for the nth

detected symbol stream, $\Delta_{SNRn}$ being the margin from the received SNR for the nth detected symbol stream to the threshold of the operating modulation and coding scheme (MCS) for the nth detected symbol stream, and $\alpha$ being a weighting parameter in the range from 0 to 1 selected so as to optimise an error rate probability value for the n detected symbol streams; and selecting the detected symbol stream with the highest value of s to be the first of the n detected symbol streams to be processed in the OSIC scheme.

Embodiments of the present invention can therefore provide an improved OSIC receiver and method for use therewith.

Reference is made, by way of example only, to the accompanying drawings in which:

Fig. 1 is a conceptual diagram of a MIMO communication channel;
Fig. 2 is a schematic diagram of a transmitter and a receiver communicating via a MIMO channel;
Fig. 3 is a schematic diagram of a MIMO-OFDM transmitter;
Fig. 4 is a schematic diagram of a MIMO-OFDM receiver;
Fig. 5 is a graph illustrating BER performance against SNR for different MCSs in a single user system;
Fig. 6 is a graph illustrating BER performance against average SNR using an embodiment of the present invention; and
Fig. 7 is a flowchart illustrating a process used in an embodiment of the present invention.

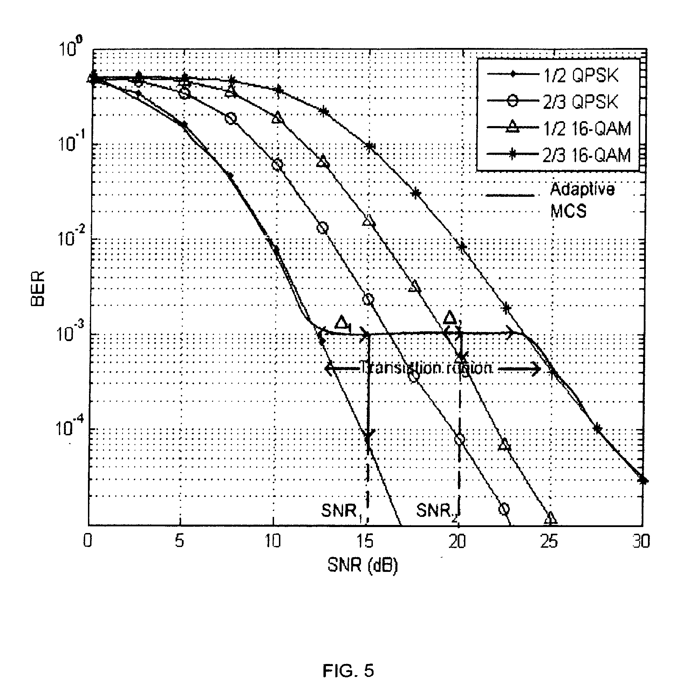

The general concept underlying an embodiment of the present invention will be explained with reference to Figs. 5 to 7. Fig. 5 shows BER performance against SNR for four different MCSs in an AMC scheme, in this case ½ QPSK, 2/3 QPSK, ½ 16-QAM and 2/3 16-QAM. The ideal BER performance curve of the AMC scheme is shown in Fig. 5 by the plain solid line. In this AMC scheme, the $10^{-3}$ BER level is the threshold for switching between MCSs. The flat region of the BER performance curve of the AMC scheme corresponds to the SNR region where MCS switching occurs. In the uplink, users are allocated the highest possible MCS while maintaining a BER level of $10^{-3}$ or lower.

As discussed above, in an MU-MIMO communication system an OSIC scheme can be used to recover the Nt transmitted symbol streams. After obtaining "detected" symbol streams, which are estimates of the transmitted symbol streams, by means of initial spatial or space-time processing of the Nr received symbol streams, the detected symbol streams are subjected to a successive interference cancellation processing technique in a particular order. In accordance with an embodiment of the present invention, that one of the n detected symbol streams which is to be processed first is selected by calculating, for each of the n detected symbol streams, a value s, where $s = \alpha . SNR_n + (1- \alpha).\Delta_{SNRn}$, and selecting the stream with the highest value of s to be the first of the n detected symbol streams to be processed. $SNR_n$ is the received signal-to-noise-and-interference ratio (SNR) for the nth detected symbol stream. The SNR gap $\Delta_{SNRn}$, is the margin from the received SNR for the nth detected symbol stream to the threshold of the operating modulating and coding scheme (MCS) for the nth detected symbol stream. Fig. 5 illustrates $SNR_n$ and $\Delta_{SNRn}$ for two users ($SNR_1$ $\Delta_1$; $SNR_2$, $\Delta_2$); from this it can be seen that for a higher $\Delta_{SNR}$ the BER probability becomes lower. $\alpha$ is a weighting parameter in the range from 0 to 1 selected so as to optimise an error rate probability value for the n detected symbol streams. In this way, the selection metric s is influenced by both the received SNR of the detected symbol stream, which is an indication of the accuracy of the recovered symbol stream, and the SNR gap $\Delta_{SNR}$, which is indicative of the BER for the recovered symbol stream. The SNR can be estimated by the receiver from pilot signals or other reference signals. The SNR threshold is known for a given MCS and the receiver is informed about the MCS employed, for example through separate signalling. The SNR gap can be determined from the SNR threshold.

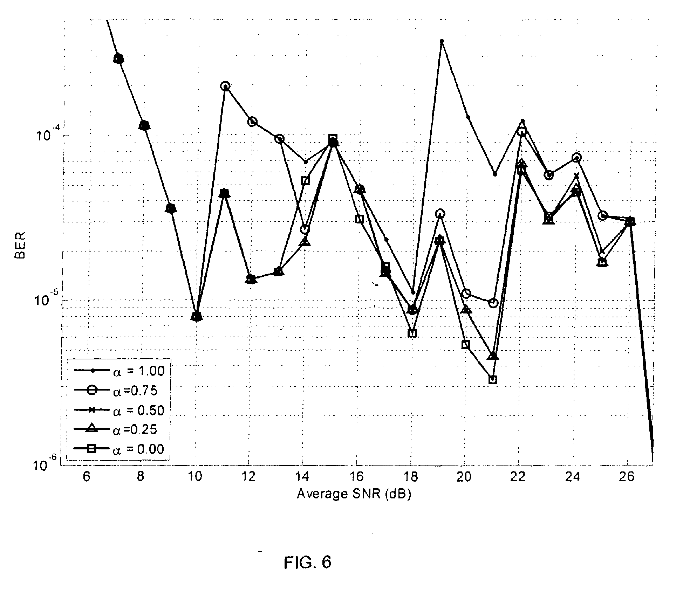

Fig. 6 illustrates the selection algorithm $s = \alpha . SNR_n + (1- \alpha).\Delta_{SNRn}$ in a link level simulation of a 4x4 MU-MIMO uplink setup. The four MCSs shown in Fig. 5 are considered in AMC switching, with switching thresholds taken at the $10^{-3}$ BER level. The four users in the MU-MIMO uplink are considered to be experiencing shadow fading levels of -5dB, -2dB, 2dB and 5dB. The fast fading in the radio channels is modelled by zero mean, unit variance Rayleigh fading coefficients. The transmitter chain is modelled by convolutional encoding, puncturing, interleaving and modulation steps, the OSIC receiver carrying out reciprocal operations.

Figure 6 shows the overall BER at the output of the OSIC receiver for different values of $\alpha$, $\alpha=0$, $\alpha=0.25$, $\alpha = 0.50$, $\alpha = 0.75$ and $\alpha=1$, against the Average SNR of the four MU-MIMO streams. In this setup the MCS transition region spans from around 10dB to 25dB of average SNR. From Figure 6 it is clear that all OSIC schemes with some contribution of $\Delta_{SNR}$ to the selection metric s (i.e. where $\alpha < 1$) perform better than a conventional OSIC scheme based on SNR in the MCS transition region. Outside the transition region all four MU-MIMO streams tend to be assigned the same MCS and the OSIC selection schemes therefore converge to a single solution. Considering the average BER in the transition region, in this example an OSIC scheme based on $\alpha=0.25$ gives the lowest average BER and hence the best overall performance, reducing the average BER by 62% as compared to an OSIC scheme using only SNR.

The Block Error Rates (BLER) and re-transmissions would also show a similar level of reduction, assuming maximum one re-transmission and an approximately proportional relationship between BER and BLER in the region of interest. In practical systems, the actual increase in throughput over an OSIC scheme selecting users on the basis of SNR only will depend on the absolute level of re-transmissions.

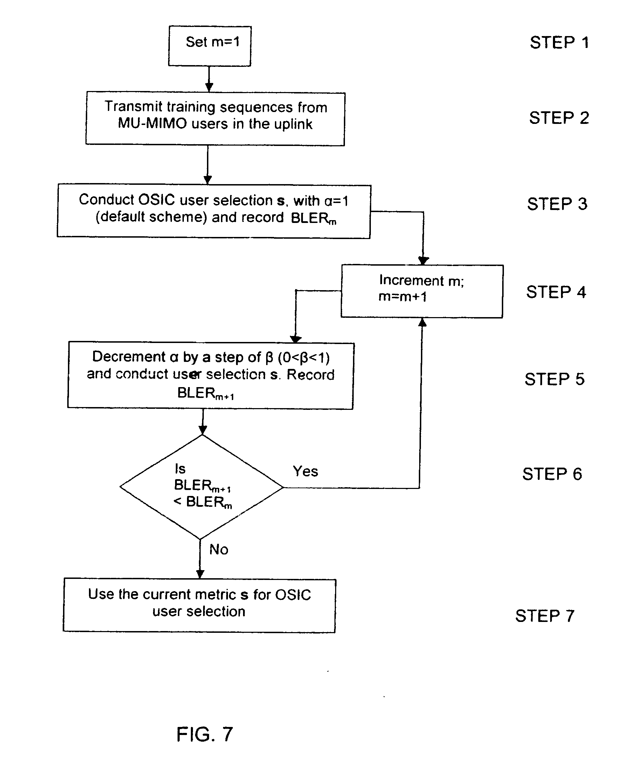

The value of the weighting parameter $\alpha$ is dependent upon the channel conditions, the MCSs used and the levels of shadow fading in the system. Thus, in practice it is desirable to "tune" the weighting parameter $\alpha$ by carrying out an iterative training session before carrying out OSIC processing. A flow chart for a proposed iterative training session is shown in Fig. 7. In STEP 1 a count m is set to 1. In STEP 2, training sequences are transmitted from the MU-MIMO users in the uplink. In STEP 3 the symbol stream to be processed first is selected using $s = SNR_n$ (i.e. $\alpha = 1$) and the value of $BLER_m$ for m = 1 is recorded. In STEP 4 m is incremented by 1 (m=m+1). In STEP 5 $\alpha$ is decremented by an amount $\beta$, where $0 < \beta < 1$, the symbol stream to be processed first is selected using the new value of $\alpha$, and the value of $BLER_{m+1}$ is recorded. In STEP 6, a comparison is made between $BLER_m$ and $BLER_{m+1}$. If $BLER_{m+1} < BLER_m$, the tuning method repeats STEPS 4, 5 and 6. If $BLER_{m+1} > BLER_m$, in STEP 7 the value of $\alpha$ used to find $BLER_m$ is used to calculate the value of s when selecting the first symbol stream to be processed in each stage of the OSIC scheme.

It should be noted that the iterative training session explained with reference to Fig. 7 is merely an example, and $\alpha$ may be selected in a different manner. For example, $\alpha$ may be selected based on the spread of the signal-to-noise-and-interference ratio (SNR) values $SNR_n$ for the n detected symbol streams. With a larger spread of $SNR_n$ values, a larger value of $\alpha$ is required.

Although an embodiment of the present invention has been described with reference to a MU-MIMO communication system, the present invention may be applied to other multi-channel communication systems in which OSIC processing can be used, especially where the channel conditions of the individual channels are sufficiently different to justify the use of different modulation and coding schemes for different transmitting antennas.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

**Claims**

1. A method of determining which of n symbol streams detected by a receiver in a multi-channel wireless communication system should be processed first in an ordered successive interference cancellation, OSIC, scheme, each of the n detected symbol streams being an estimate of a transmitted symbol stream transmitted by a transmitter of the communication system, **characterised by** the steps of:

   calculating, for each of the n detected symbol streams, a value s, where $s = \alpha . SNR_n + (1-\alpha).\Delta_{SNRn}$, $SNR_n$ being the received signal-to-noise-and-interference ratio, SNR, for the nth detected symbol stream, $\Delta_{SNRn}$ being the margin from the received SNR for the nth detected symbol stream to the threshold of the operating modulation and coding scheme, MCS, for the nth detected symbol stream, and $\alpha$ being a weighting parameter in the range from 0 to 1 selected so as to optimise an error rate probability value for the n detected symbol streams; and
   selecting the detected symbol stream with the highest value of s to be the first of the n detected symbol streams to be processed in the OSIC scheme.

2. A method as claimed in claim 1, wherein the communication system is a multi-user multiple input/multiple output, MU-MIMO, communication system.

3. A method as claimed in claim 1 or 2, further comprising finding a value for the parameter $\alpha$ by carrying out an iterative training session, before calculating the value s for the n detected symbol streams.

4. A method as claimed in claim 3, wherein the training session comprises:

   transmitting training sequences to the receiver;
   calculating s for the received training sequences m times using a different value of $\alpha$ in each calculation step, where $m \geqq 1$ and the value of $\alpha$ is decreased for each successive calculation step, and recording the error rate probability values obtained using those values of $\alpha$;
   for each calculation step after the first, comparing the error rate probability value obtained in that calculation step with that obtained in the immediately preceding calculation step, until the error rate probability value obtained in the calculation step is the same as or higher than that obtained in the immediately preceding calculation step; and
   selecting the value of $\alpha$ used in the immediately preceding calculation step to be the value of $\alpha$

to be used to calculate the value s for the n detected symbol streams.

5. A method as claimed in any preceding claim, wherein the error rate probability value is the Block Error Rate, BLER, or the Bit Error Rate, BER.

6. A multi-channel wireless communication system having a receiver, wherein the receiver is operable to determine which of n symbol streams detected by the receiver should be processed first in an ordered successive interference cancellation, OSIC scheme to be carried out by the receiver, each of the n detected symbol streams being an estimate of a transmitted symbol stream transmitted by a transmitter of the communication system, **characterised by**:

calculating means for calculating, for each of the n detected symbol streams, a value s, where s $= \alpha. SNR_n + (1- \alpha)\cdot\Delta_{SNRn}$, $SNR_n$ being the received signal-to-noise-and-interference ratio, SNR, for the nth detected symbol stream, $\Delta_{SNRn}$ being the margin from the received SNR for the nth detected symbol stream to the threshold of the operating modulation and coding scheme, MCS, for the nth detected symbol stream, and $\alpha$ being a weighting parameter in the range from 0 to 1 selected so as to optimise an error rate probability value for the n detected symbol streams; and
selecting means for selecting the detected symbol stream with the highest value of s to be the first of the n detected symbol streams to be processed in the OSIC scheme.

7. A system as claimed in claim 6, wherein a transmitter of the communication system is configured to employ an adaptive modulation and coding, AMC, scheme.

8. A system as claimed in claim 6 or 7, wherein the communication system is a multi-user multiple input/ multiple output, MU-MIMO, communication system.

9. A system as claimed in claim 6, 7 or 8, further comprising parameter determining means for finding a value for the parameter $\alpha$, before calculating the value s for the n detected symbol streams, by carrying out an iterative training session.

10. A system as claimed in claim 9, wherein the parameter determining means are operable to carry out the training session of:

transmitting training sequences to the receiver; calculating s for the received training sequences m times using a different value of $\alpha$ in each calculation step, where $m \geqq 1$ and the value of $\alpha$ is decreased for each successive calculation step, and recording the error rate probability values obtained using those values of $\alpha$;
for each calculation step after the first, comparing the error rate probability value obtained in that calculation step with that obtained in the immediately preceding calculation step, until the error rate probability value obtained in the calculation step is the same as or higher than that obtained in the immediately preceding calculation step; and
selecting the value of $\alpha$ used in the immediately preceding calculation step to be the value of $\alpha$ to be used to calculate the value s for the n detected symbol streams.

11. A system as claimed in any one of claims 6 to 10, wherein the error rate probability value is the Block Error Rate, BLER, or the Bit Error Rate, BER.

12. A receiver for use in a multi-channel wireless communication system, which receiver comprises order determining means for determining which of n symbol streams detected by the receiver should be processed first in an ordered successive interference cancellation, OSIC, scheme to be carried out by the receiver, **characterised in that** the order determining means comprises:

calculating means for calculating, for each of the n detected symbol streams, a value s, where s $= \alpha. SNR_n + (1- \alpha)\cdot\Delta_{SNRn}$, $SNR_n$ being the received signal-to-noise-and-interference ratio, SNR, for the nth detected symbol stream, $\Delta_{SNRn}$ being the margin from the received SNR for the nth detected symbol stream to the threshold of the operating modulation and coding scheme, MCS, for the nth detected symbol stream, and $\alpha$ being a weighting parameter in the range from 0 to 1 selected so as to optimise an error rate probability value for the n detected symbol streams; and
selecting means for selecting the detected symbol stream with the highest value of s to be the first of the n detected symbol streams to be processed in the OSIC scheme.

13. A receiver as claimed in claim 12, for use in a multi-user multiple input/multiple output, MU-MIMO, communication system.

14. A receiver as claimed in claim 12 or 13, further comprising parameter determining means for finding a value for the parameter $\alpha$, before calculating the value s for the n detected symbol streams, by carrying out an iterative training session.

15. A receiver as claimed in claim 14, wherein the parameter determining means are operable to carry out the training session of:

calculating s for received training sequences m times using a different value of $\alpha$ in each calculation step, where m≧1 and the value of $\alpha$ is decreased for each successive calculation step, and recording the error rate probability values obtained using those values of $\alpha$;

for each calculation step after the first, comparing the error rate probability value obtained in that calculation step with that obtained in the immediately preceding calculation step, until the error rate probability value obtained in the calculation step is the same as or higher than that obtained in the immediately preceding calculation step; and

selecting the value of $\alpha$ used in the immediately preceding calculation step to be the value of $\alpha$ to be used to calculate the value s for the n detected symbol streams.

16. A receiver as claimed in any one of claims 12 to 15, wherein the error rate probability value is the Block Error Rate, BLER, or the Bit Error Rate, BER.

17. A computer program which, when executed on a receiver of a multi-channel wireless communication system, is operable to carry out a method of determining which of n symbol streams detected by the receiver should be processed first in an ordered successive interference cancellation, OSIC, scheme, each of the n detected symbol streams being an estimate of a transmitted symbol stream transmitted by a transmitter of the communication system, which method comprises the steps of:

calculating, for each of the n detected symbol streams, a value s, where $s = \alpha \cdot SNR_n + (1-\alpha) \cdot \Delta_{SNRn}$, $SNR_n$ being the received signal-to-noise-and-interference ratio, SNR, for the nth detected symbol stream, $\Delta_{SNRn}$ being the margin from the received SNR for the nth detected symbol stream to the threshold of the operating modulation and coding scheme, MCS, for the nth detected symbol stream, and $\alpha$ being a weighting parameter in the range from 0 to 1 selected so as to optimise an error rate probability value for the n detected symbol streams; and selecting the detected symbol stream with the highest value of s to be the first of the n detected symbol streams to be processed in the OSIC scheme.

**Patentansprüche**

1. Verfahren zum Bestimmen, welcher von n Zeichenströmen, die durch einen Empfänger in einem drahtlosen Multi-Kanal-Kommunikationssystem detektiert werden, in einem geordneten sequentiellen Interferenzsubtraktions-OSIC-Schema zuerst verarbeitet werden soll, wobei jeder der n detektierten Zeichenströme eine Schätzung eines gesendeten Zeichenstroms ist, der durch einen Sender des Kommunikationssystems gesendet wird, **gekennzeichnet durch** die Schritte:

Berechnen, für jeden der n detektierten Zeichenströme, eines Wertes s, wobei $s = \alpha \cdot SNRn + (1-\alpha) \cdot \Delta_{SNRn}$ ist, $SNR_n$ das empfangene Signal-zu-Rausch-und-Interferenzverhältnis SNR für den n-ten detektierten Zeichenstrom ist, $\Delta_{SNRn}$ die Toleranz von dem empfangenen SNR bei dem n-ten detektierten Zeichenstrom bis zur Schwelle des in Betrieb befindlichen Modulations- und Codierschemas MCS bei dem n-ten detektierten Zeichenstrom ist und $\alpha$ ein Wichtungsparameter in dem Bereich von 0 bis 1 ist, der so selektiert wird, um einen fehlerratenwahrscheinlichkeitswert bei den n detektierten Zeichenströmen zu optimieren; und

Selektieren des detektierten Zeichenstroms mit dem höchsten Wert von s, um von den n delektierten Zeichenströmen in dem OSIC-Schema zuerst verarbeitet zu werden.

2. Verfahren nach Anspruch 1, bei dem das Kommunikationssygtem ein Mehrbenutzer-Vielfacheingangs-/ Vielfachausgangs-MU-MIMO-Kommunikationssystem ist.

3. Verfahren nach Anspruch 1 oder 2, ferner mit dem Finden eines Wertes für den Parameter $\alpha$ durch Ausführen einer iterativen Trainingssession, bevor der Wert s für die n detektierten Zeichenströme berechnet wird.

4. Verfahren nach Anspruch 3, bei dem die Trainingssession umfasst:

Senden von Trainingssequenzen an den Empfänger;

m-maliges Berechnen von s für die empfangenen Trainingssequenzen unter Verwendung eines verschiedenen Wertes von $\alpha$ bei jedem Berechnungsschritt, wobei m≥1 ist und der Wert von $\alpha$ bei jedem sukzessiven Berechnungsschritt verringert wird, und Aufzeichnen der Fehlerratenwahrscheinlichkeitswerte, die unter Verwendung jener Werte von $\alpha$ erhalten werden;

Vergleichen, bei jedem Berechnungsschritt nach dem ersten Berechnungsschritt, des Fehlerratenwahrscheinlichkeitswertes, der bei jenem Berechnungsschritt erhalten wird, mit dem, der bei dem unmittelbar vorhergehenden Berechnungsschritt erhalten wurde, bis der Fehlerratenwahrscheinlichkeitswert, der bei dem Berechnungsschritt erhalten wird, derselbe wie oder höher als der ist, der bei dem unmittelbar vorhergehenden Berechnungsschritt erhalten wurde; und

Selektieren des Wertes von α, der bei dem unmittelbar vorhergehenden Berechnungsschritt verwendet wurde, als Wert von α, der zu verwenden ist, um den Wert s für die n detektierten Zeichenströme zu berechnen.

**5.** Verfahren nach einem vorhergehenden Anspruch, bei dem der Fehlerratenwahrscheinlichkeitswert die Blockfehlerrate BLER oder die Bitfehlerrate BER ist.

**6.** Drahtlose Multi-Kanal-Kommunikationssystem mit einem Empfänger,
bei dem der- Empfänger betriebsfähig ist, um zu bestimmen, welcher von n Zeichenströmen, die durch den Empfänger detektiert werden, in einem geordneten sequentiellen Tnterferenzsubtraktions-OSIC-Schema, das durch den Empfänger auszuführen ist, zuerst verarbeitet werden soll, wobei jeder der n detektierten Zeichenströme eine Schätzung eines gesendeten Zeichenstroms ist, der durch einen Sender des Kommunikationssystems gesendet wird, **gekennzeichnet durch**:

ein Berechnungsmittel zum Berechnen, für jeden der n detektierten Zeichenströme, eines wertes s, wobei $s=\alpha \cdot SNR_n + (1-\alpha) \cdot \Delta_{SNRn}$ ist, $SNR_n$ das empfangene Signal-zu-Rausch-und-Interferenzverhältnis SNR bei dem n-ten detektierten Zeichenstrom ist, $\Delta_{SNRn}$ die Toleranz von dem empfangenen SNR bei dem n-ten detektierten Zeichenstrom bis zur Schwelle des in Betrieb befindlichen Modulation- und Codierschemas MCS bei dem n-ten detektierten Zeichenstrom ist und α ein Wichtungsparameter in dem Bereich von 0 bis 1 ist, der so selektiert wird, um einen Fehlerratenwahrscheinlichkeitswert bei den n detektierten Zeichenströmen zu optimieren; und
ein Selektionsmittel zum Selektieren des detektierten Zeichenstroms mit dem höchsten Wert von s, um von den n detektierten Zeichenströmen in dem OSIC-Schema zuerst verarbeitet zu werden.

**7.** System nach Anspruch 6, bei dem ein Sender des Kommunikationssystems konfiguriert ist, um ein adaptives Modulation- und Codier-AMC-Schema anzuwenden.

**8.** System nach Anspruch 6 oder 7, bei dem das Kommunikationssystem ein Mehrbenutzer-Vielfacheingangs-/Vielfachausgangs-MU-MIMO-Kommunikationssystem ist.

**9.** System nach Anspruch 6, 7 oder 8, ferner mit einem Parameterbestimmungsmittel zum Finden eines Wertes für den Parameter α, bevor der Wert s für die n detektierten Zeichenströme berechnet wird, durch Ausführen einer iterativen Trainingssession.

**10.** System nach Anspruch 9, bei dem das Parameterbestimmungsmittel betriebsfähig ist, um die Trainingssession auszuführen:

Senden von Trainingssequenzen an den Empfänger;
m-maliges Berechnen von s für die empfangenen Trainingssequenzen unter Verwendung eines verschiedenen Wertes von a bei jedem Berechnungsschritt, wobei $m \geq 1$ ist und der Wert von α bei jedem sukzessiven Berechnungsschritt verringert wird, und Aufzeichnen der Fehlerratenwahrscheinlichkeitswerte, die unter Verwendung jener Werte von α erhalten werden;
Vergleichen, bei jedem Berechnungsschritt nach dem ersten Berechnungsschritt, des Fehlerratenwahrscheinlichkeitswertes, der bei jenem Berechnungsschritt erhalten wird, mit dem, der bei dem unmittelbar vorhergehenden Berechnunqsschritt erhalten wurde, bis der Fehlerratenwahr-scheinlichkeitswert, der bei dem Berechnungsschritt erhalten wird, derselbe wie oder höher als der ist, der bei dem unmittelbar vorhergehenden Berechnungsschritt erhalten wurde; und
Selektieren des Wertes von α, der bei dem unmittelbar vorhergehenden Berechnungsschritt verwendet wurde, als Wert von α, der zu verwenden ist, um den Wert s für die n detektierten Zeichenströme zu berechnen.

**11.** System nach einem der Ansprüche 6 bis 10, bei dem der Fehlerratenwahrscheinlichkeitswert die Blockfehlerrate BLER oder die Bitfehlerrate BER ist.

**12.** Empfänger zur Verwendung in einem drahtlosen Multi-Kanal-Kommunikationssystem,
welcher Empfänger ein Ordnungsbestimmungsmittel umfasst, zum Bestimmen, welcher von n Zeichenströmen, die durch den Empfänger detektiert werden, in einem geordneten sequentiellen Interferenzsubtraktions-OSIC-Schema, das durch den Empfänger auszuführen ist, zuerst verarbeitet werden soll, **dadurch gekennzeichnet**, das das Ordnungsbestimmungsmittel umfasst:

ein Berechnungsmittel zum Berechnen, für jeden der n detektierten Zeichenströme, eines Wertes s, wobei $s=\alpha \cdot SNR_n + (1-\alpha) \cdot \Delta_{SNRn}$ ist, SN-

$R_n$ das empfangene Signal-zu-Rausch-und-Interferenzverhältnis SNR bei dem n-ten detektierten Zeichenstrom ist, $\Delta_{SNRn}$ die Toleranz von dem empfangenen SNR bei dem n-ten detektierten Zeichenstrom bis zur Schwelle des in Betrieb befindlichen Modulation- und Codierschemas MCS bei dem n-ten detektierten Zeichenstrom ist und a ein Wichtungsparameter in dem Bereich von 0 bis 1 ist, der so selektiert wird, um einen Fehlerratenwahrscheinlichkeitswert bei den n detektierten Zeichenströmen zu optimieren; und

ein Selektionsmittel zum Selektieren des detektierten Zeichenstroms mit dem höchsten Wert von s, um von den n detektierten Zeichenströmen in dem OSIC-Schema zuerst verarbeitet zu werden.

13. Empfänger nach Anspruch 12, zur Verwendung in einem Mehrbenutzer-Vielfacheingangs-/Vielfachausgangs-MU-MIMO-Kommunikationssystem.

14. Empfänger nach Anspruch 12 oder 13, ferner mit einem Parameterbestimmungsmittel zum Finden eines Wertes für den Parameter $\alpha$, bevor der Wert s für die n detektierten Zeichenströme berechnet wird, durch Ausführen einer iterativen Trainingssession.

15. Empfänger nach Anspruch 14, bei dem das Parameterbestimmungsmittel betriebsfähig ist, um die Trainingssession auszuführen:

m-maliges Berechnen von s für die empfangenen Trainingssequenzen unter Verwendung eines verschiedenen Wertes von $\alpha$ bei jedem Berechnungsschritt, wobei m≥1 ist und der Wert von $\alpha$ bei jedem sukzessiven Berechnungsschritt verringert wird, und Aufzeichnen der Fehlerratenwahrseheinlichkeitswerte, die unter Verwendung jener werte von $\alpha$ erhalten werden; Vergleichen, bei jedem Berechnungsschritt nach dem ersten Berechnungsschritt, des Fehlerratenwahrscheinlichkeitswertes, der bei jenem Berechnungsschritt erhalten wird, mit dem, der bei dem unmittelbar vorhergehenden Berechnungsschritt erhalten wurde, bis der Fehlerratenwahrscheinlichkeitswert, der bei dem Berechnungsschritt erhalten wird, derselbe wie oder höher als der ist, der bei dem unmittelbar vorhergehenden Berechnungsschritt erhalten wurde; und Selektieren des Wertes von $\alpha$, der bei dem unmittelbar vorhergehenden Berechnungsschritt verwendet wurde, als Wert von $\alpha$, der zu verwenden ist, um den Wert s für die n detektierten zeichenströme zu berechnen.

16. Empfänger nach einem der Ansprüche 12 bis 15, bei dem der Fehlerratenwahrscheinlichkeitswert die Blockfehlerrate BLER oder die Bitfehlerrate BER ist.

17. Computerprogramm, das betriebsfähig ist, wenn es in einem Empfänger eines drahtlosen Multi-Kanal-Kommunikationssystems ausgeführt wird, um ein Verfahren zum Bestimmen dessen auszuführen, welcher von n Zeichenströmen, die durch den Empfänger detektiert werden, in einem geordneten sequentiellen Interferenzsubtraktions-OSIC-Schema zuerst verarbeitet werden soll, wobei jeder der n detektierten Zeichenströme eine Schätzung eines gesendeten Zeichenstroms ist, der durch einen Sender des Kommunikationssystems gesendet wird, welches Verfahren die Schritte umfasst:

Berechnen, für jeden der n detektierten Zeichenströme, eines Wertes s, wobei s-$\alpha \cdot$SNR$_n$+ (1-$\alpha$)$\cdot \Delta_{SNRn}$ ist, SNR$_n$ das empfangene Signal-zu-RausCh-und-Interferenzverhältnis SNR bei dem n-ten detektierten Zeichenstrom ist, $\Delta_{SNRn}$ die Toleranz von dem empfangenen SNR bei dem n-ten detektierten Zeichenstrom bis zur Schwelle des in Betrieb befindlichen Modulations- und Codierschemas MCS bei dem n-ten detektierten Zeichenstrom ist und $\alpha$ ein Wichtungsparameter in dem Bereich von 0 bis 1 ist, der so selektiert wird, um einen Fehlerratenwahrscheinlichkeitswert bei den n detektierten Zeichenströmen zu optimieren; und Selektieren des detektierten Zeichenstroms mit dem höchsten Wert von s, um von den n delektierten Zeichenströmen in dem OSIC-Schema zuerst verarbeitet zu werden.

**Revendications**

1. Procédé pour déterminer lequel des n flux de symboles détectés par un récepteur dans un système de communication sans fil multicanaux doit être traité en premier dans un schéma d'annulations successives ordonnées d'interférences, OSIC, chacun des n flux de symboles détectés étant une estimation d'un flux de symboles transmis transmis par un système de communication, **caractérisé par** les étapes consistant à :

calculer, pour chacun des n flux de symboles détectés, une valeur s, où s = $\alpha$.SNR$_n$ + (1-$\alpha$) .$\Delta_{SNRn}$, SNR$_n$ étant le rapport signal-bruit et interférence reçu, SNR, pour le n-ième flux de symboles détecté, $\Delta_{SNRn}$ étant la marge du SNR reçu pour le n-ième flux de symboles détecté au seuil du schéma de codage et de modulation d'opération, MCS, pour le n-ième flux de symboles détecté, et $\alpha$ étant un paramètre de pondération situé dans la plage de 0 à 1 sélectionné de manière à optimiser une valeur de probabilité de taux d'erreur pour les n flux de symboles détectés ; et

sélectionner le flux de symboles détectés avec la valeur de s la plus élevée pour être le premier des n flux de symboles détectés à être traité dans le schéma OSIC.

**2.** Procédé selon la revendication 1, dans lequel le système de communication est un système de communication à entrées multiples/sorties multiples multi-utilisateurs, MU-MIMO.

**3.** Procédé selon la revendication 1 ou 2, comportant en outre la recherche d'une valeur pour le paramètre $\alpha$ en effectuant une session d'entraînement itératif, avant de calculer la valeur s pour les n flux de symboles détectés.

**4.** Procédé selon la revendication 3, dans lequel la session d'entraînement comporte :

la transmission des séquences d'entraînement au récepteur ;

le calcul de s pour les séquences d'entraînement reçues m fois en utilisant une valeur différente de $\alpha$ dans chaque étape de calcul, où $m \geq 1$ et la valeur de $\alpha$ est diminuée pour chaque étape de calcul successive, et l'enregistrement des valeurs de probabilité de taux d'erreur obtenues en utilisant ces valeurs de $\alpha$ ;

pour chaque étape de calcul après la première, la comparaison de la valeur de probabilité de taux d'erreur obtenue dans cette étape de calcul avec celle obtenue dans l'étape de calcul immédiatement précédente, jusqu'à ce que la valeur de probabilité de taux d'erreur obtenue au cours de l'étape de calcul soit la même que ou plus élevée que celle obtenue dans l'étape de calcul immédiatement précédente ;

sélectionner la valeur de $\alpha$ utilisée au cours de l'étape de calcul immédiatement précédente pour être la valeur de $\alpha$ à utiliser pour calculer la valeur s pour les n flux de symboles détectés.

**5.** Procédé selon l'une des revendications précédentes, dans lequel la valeur de probabilité de taux d'erreur est le taux d'erreur de bloc, BLER, ou le taux d'erreur de bits, BER.

**6.** Système de communication sans fil multicanaux possédant un récepteur,

dans lequel le récepteur permet de déterminer lequel des n flux de symboles détectés par le récepteur doit être traité en premier dans un schéma d'annulations successives ordonnées d'interférences, OSIC, à effectuer par le récepteur, chacun des n flux de symboles détectés étant une estimation d'un flux de symboles transmis transmis par un transmetteur du système de communication, **caractérisé par**:

un moyen de calcul pour calculer, pour chacun des n flux de symboles détectés, une valeur s, où $s = \alpha.SNR_n + (1-\alpha).\Delta_{SNRn}$, $SNR_n$ étant le rapport signal-bruit et interférence reçu, SNR, pour le n-ième flux de symboles détecté, $\Delta_{SNRn}$ étant la marge du SNR reçu pour le n-ième flux de symboles détecté au seuil de la modulation d'opération et du schéma de codage, MCS, pour le n-ième flux de symboles détecté, et $\alpha$ étant un paramètre de pondération situé dans la plage de 0 à 1 sélectionné de manière à optimiser une valeur de probabilité de taux d'erreur pour les n flux de symboles détectés ; et

un moyen de sélection pour sélectionner le flux de symboles détecté avec la valeur de s la plus élevée pour être le premier des n flux de symboles détectés à être traité dans le schéma OSIC.

**7.** Système selon la revendication 6, dans lequel un transmetteur du système de communication est configuré pour utiliser un schéma de codage et modulation adaptatif, AMC.

**8.** Système selon la revendication 6 ou 7, dans lequel le système de communication est un système de communication à entrées multiples/sorties multiples multi-utilisateurs, MU-MIMO.

**9.** Système selon la revendication 6, 7 ou 8, comportant en outre un moyen de détermination de paramètre pour trouver une valeur pour le paramètre $\alpha$, avant le calcul de la valeur s pour les n flux de symboles détectés, en effectuant une session d'entraînement itératif.

**10.** Système selon la revendication 9, dans lequel le moyen de détermination de paramètre permet d'effectuer la session d'entraînement :

de transmission des séquences d'entraînement au récepteur ;

de calcul de s pour les séquences d'entraînement reçues m fois en utilisant une valeur différente de $\alpha$ dans chaque étape de calcul, où $m \geq 1$ et la valeur de $\alpha$ est diminuée pour chaque étape de calcul successive, et d'enregistrement des valeurs de probabilité de taux d'erreur obtenues en utilisant ces valeurs de $\alpha$ ;

pour chaque étape de calcul après la première, de comparaison de la valeur de probabilité de taux d'erreur obtenue dans cette étape de calcul avec celle obtenue dans l'étape de calcul immédiatement précédente, jusqu'à ce que la valeur de probabilité de taux d'erreur obtenue au cours de l'étape de calcul soit la même que ou plus élevée que celle obtenue au cours de l'étape de calcul immédiatement précédente ; et

de sélection de la valeur de $\alpha$ utilisée au cours de l'étape de calcul immédiatement précédente pour être la valeur de $\alpha$ à utiliser pour calculer la valeur s pour les n flux de symboles détectés.

**11.** Système selon l'une quelconque des revendications 6 à 10, dans lequel la valeur de probabilité de taux d'erreur est le taux d'erreur de bloc, BLER, ou le taux d'erreur de bits, BER.

**12.** Récepteur utilisé dans un système de communication sans fils multicanaux,

lequel récepteur comporte un moyen de détermination d'ordre pour déterminer lequel des n flux de symboles détectés par le récepteur doit être traité en premier dans un schéma d'annulations successives ordonnées d'interférences, OSIC, à effectuer par le récepteur, **caractérisé en ce que** le moyen de détermination d'ordre comporte :

un moyen de calcul pour calculer, pour chacun des n flux de symboles détectés, une valeur s, où $s = \alpha.SNR_n + (1-\alpha) .\Delta_{SNRn}$, $SNR_n$ étant le rapport signal-bruit et interférence reçu, SNR, pour le n-ième flux de symboles détecté, $\Delta_{SNRn}$ étant la marge du SNR reçu pour le n-ième flux de symboles détecté au seuil du schéma de codage et de modulation d'opération, MCS, pour le n-ième flux de symboles détecté, et $\alpha$ étant un paramètre de pondération situé dans la plage de 0 à 1 sélectionnée de manière à optimiser une valeur de probabilité de taux d'erreur pour les n flux de symboles détectés ; et

un moyen de sélection pour sélectionner le flux de symboles détecté avec la valeur de s la plus élevée pour être le premier des n flux de symboles détectés à être traité dans le schéma OSIC.

**13.** Récepteur selon la revendication 12, utilisé dans un système de communication à entrées multiples/sorties multiples multi-utilisateurs, MU-MIMO.

**14.** Récepteur selon la revendication 12 ou 13, comportant en outre un moyen de détermination de paramètre pour rechercher une valeur pour le paramètre $\alpha$, avant le calcul de la valeur s pour les n flux de symboles détectés, en effectuant une session d'entraînement itératif.

**15.** Récepteur selon la revendication 14, dans lequel le moyen de détermination de paramètre permet d'effectuer une session d'entraînement :

de calcul de s pour les séquences d'entraînement reçues m fois en utilisant une valeur différente de $\alpha$ dans chaque étape de calcul, où m $\geq 1$ et la valeur de $\alpha$ est diminuée pour chaque étape de calcul successive, et d'enregistrement des valeurs de probabilité de taux d'erreur obtenues en utilisant ces valeurs de $\alpha$ ;

pour chaque étape de calcul après la première, de comparaison de la valeur de probabilité de taux d'erreur obtenue dans cette étape de calcul avec celle obtenue au cours de l'étape de calcul immédiatement précédente, jusqu'à ce que la valeur de probabilité de taux d'erreur obtenue dans l'étape de calcul soit la même que ou supérieure à celle obtenue au cours de l'étape de calcul immédiatement précédente ; et

de sélection de la valeur de $\alpha$ utilisée au cours de l'étape de calcul immédiatement précédente pour être la valeur de $\alpha$ à utiliser pour calculer la valeur s pour les n flux de symboles détectés.

**16.** Récepteur selon l'une quelconque des revendications 12 à 15, dans lequel la valeur de probabilité de taux d'erreur est le taux d'erreur de bloc, BLER, ou le taux d'erreur de bits, BER.

**17.** Programme informatique qui, lorsqu'il est exécuté sur un récepteur d'un système de communication sans fil multicanaux, permet d'effectuer un procédé pour déterminer lequel des n flux de symboles détectés par le récepteur doit être traité en premier dans un schéma d'annulations successives ordonnées d'interférences, OSIC, chacun des n flux de symboles détectés étant une estimation d'un flux de symboles transmis transmis par un transmetteur du système de communication, lequel procédé comporte les étapes consistant à :

calculer, pour chacun des n flux de symboles détectés, une valeur s, où $s = \alpha.SNR_n + (1-\alpha).\Delta_{SNRn}$, $SNR_n$ étant le rapport signal-bruit et interférence reçu, SNR, pour le n-ième flux de symboles détecté, $\Delta_{SNRn}$ étant la marge du SNR reçu pour le n-ième flux de symboles détecté au seuil du schéma de codage et de modulation d'opération, AMC, pour le n-ième flux de symboles détecté, et $\alpha$ étant un paramètre de pondération situé dans la plage de 0 à 1 sélectionnée de manière à optimiser une valeur de probabilité de taux d'erreur pour les n flux de symboles détectés ; et

sélectionner le flux de symboles détecté avec la valeur de s la plus élevée pour être le premier des n flux de symboles détectés à être traité dans le schéma OSIC.

FIG. 1

FIG. 2

EP 2 234 360 B1

FIG. 3

EP 2 234 360 B1

FIG. 4

ANTENNA # 0

ANTENNA # (Nr-1)

-GI

Nr

S/P

N

FFT

N

MIMO SIGNAL
PROCESSING
UNIT

11

N

P/S

Nt

DEMODULATOR

DECODER

-GI

S/P

N

FFT

N

N

P/S

DEMODULATOR

DECODER

CHANNEL ESTIMATION

EP 2 234 360 B1

FIG. 5

FIG. 6

```
┌─────────────┐
│   Set m=1   │                                    STEP 1
└─────────────┘
       │
       ▼
┌──────────────────────────┐
│ Transmit training        │
│ sequences from           │                        STEP 2
│ MU-MIMO users in the     │
│ uplink                   │
└──────────────────────────┘
       │
       ▼
┌──────────────────────────────┐
│ Conduct OSIC user selection  │
│ s, with α=1                  │                    STEP 3
│ (default scheme) and record  │
│ BLER_m                       │
└──────────────────────────────┘
```

Increment m; m=m+1                                  STEP 4

Decrement α by a step of β ($0<\beta<1$) and conduct user selection s. Record $BLER_{m+1}$                                  STEP 5

Is $BLER_{m+1} < BLER_m$      Yes                    STEP 6

No

Use the current metric s for OSIC user selection                                  STEP 7

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030189999 A